## Europäisches Patentamt
## European Patent Office
## Office européen des brevets

(19)

(11) Publication number: **0 011 955**
**B1**

(12) **EUROPEAN PATENT SPECIFICATION**

(45) Date of publication of patent specification: **16.02.83**

(21) Application number: **79302511.5**

(22) Date of filing: **08.11.79**

(51) Int. Cl.³: **F 16 F 1/40,** B 61 G 11/08,
B 60 G 11/22

(54) Composite cushion pad.

(30) Priority: **24.11.78 US 963381**

(43) Date of publication of application:
**11.06.80 Bulletin 80/12**

(45) Publication of the grant of the patent:
**16.02.83 Bulletin 83/7**

(84) Designated Contracting States:
**AT BE CH DE FR GB IT NL**

(56) References cited:
**DE - B - 1 264 876
DE - U - 7 443 430
FR - A - 2 013 043
FR - A - 2 069 487
FR - A - 2 109 975
FR - A - 2 119 169
GB - A - 816 089
GB - A - 1 074 969
US - A - 2 165 383
US - A - 2 553 635
US - A - 2 656 182
US - A - 3 086 765**

(73) Proprietor: **MIDLAND-ROSS CORPORATION
20600 Chagrin Boulevard
Shaker Heights Cleveland, Ohio 44122 (US)**

(72) Inventor: **Jwuc, Karl John
352 Whittlesy Drive
Tallmadge, Ohio 44278 (US)**

(74) Representative: **Cook, Anthony John et al,
D. YOUNG & CO. 10, Staple Inn
London, WC1V 7RD (GB)**

(56) References cited:
**US - A - 3 537 696
US - A - 3 997 151
US - A - 4 025 063**

Courier Press, Leamington Spa, England.

Composite cushion pad

The invention relates to a composite cushion pad. Such a pad may be generally suited for any application involving cushion pads, and, more particularly, for use in connection with off-the road vehicles, e.g. large trucks, wherein it is desirable to provide a soft cushioning effect in the suspension systems of the vehicles, when they are operated empty and without loads, and a much firmer or harsher cushioning effect, when the vehicles are operated fully loaded.

U.S. Patents 3 086 765 (A. L. Zanow) and 3 537 696 (R. M. Webster Jr.) are typical of the many patents relating to circular cushion pads which are generally composed of a single rubber ring which has a generally frusto-conically shaped cross-section and is bonded to one or both sides of an annular rigid plate. The above-mentioned Zanow U.S. Patent has as its primary object to provide a compression type resilient pad for shock cushioning mechanism having a cushion contour which causes the resilient material of the pad, during compression thereof, to flow in a manner to substantially obviate localized areas of high stress in the pad. Zanow states that the particular mean angles at which the outer and inner sides of the cushion should be sloped will be determined from the specific service conditions to which the pads are to be subjected and the desired operating characteristics of the shock cushioning mechanisms in which the pads are used. U.S. Patent 4 025 063 (D. Willison) is typical of the many patents relating to cushion pads which may be essentially composed of a plurality of parallel rectangular rubber cushions, each of which has a generally frusto-conically shaped cross section. U.S. Patent No. 4 025 063 is directed to facilitating quick and accurate assembly of a stack of pads and for this purpose discloses and claims a particular dowel configuration.

British Patent Specification No. 816 089 discloses a compression spring arrangement of the type comprising a series of coaxial rings of resilient material, e.g., rubber, alternated with rigid spacer members, usually of generally flat annular form and generally composed of metal, the cross-sectional form of the spring in the axial section thereof being such that considering any given ring and the two spacer members on either side thereof, the cross-sectional profile of the ring on at least one side thereof is divergent with respect to the cross-sectional profile of the spacer member at that side of the ring, with the result that the area of contact of the ring with the spacer member progressively increases as the load on the spring increases and correspondingly the deformation of the spring under said load increases. This patent discusses two different types of stress to which such spring arrangements react, namely (i) stresses produced by frequently occurring low magnitude shocks to which the spring must present a very low measure of resistance so as to avoid transmission of the shocks to the suspended object, and (ii) stresses produced by large magnitude low frequecy shocks to which the spring must present a high measure of resistance accompanied by a progressive stiffening of the spring. The invention of this British Patent is intended to enable stresses of the first type to be effectively absorbed without transmission of the shocks to the suspended object (vehicle). It illustrates one embodiment having a ring section having the form of a geometrical figure made up of a plurality of rectangles in superimposed relation to one another axially of the ring, these rectangles being of respectively different length dimension in a direction parallel to the plane of the ring.

The present invention is directed to an improved composite cushion pad having a different configuration which initially provides soft ride characteristics with improved resistance to compression when placed under a load.

According to the present invention, there is provided a composite cushion pad, comprising a circular rigid plate having a centrally disposed opening (8) defining a pair of parallel planar surfaces bounded by a continuous inner-marginal edge adjacent the opening and a continuous outer marginal edge spaced from the inner marginal edge and a first, single annular resilient cushion bonded to at least one of the surfaces of the plate and extending therefrom and having a pair of opposing continuous marginal sidewalls extending from adjacent the inner and outer marginal edges of the plate and converging in a direction away from the plate, the pad being characterized by a second, single annular resilient cushion atop the first cushion and integral therewith, the second cushion having a pair of opposing continuous marginal sidewalls which extend from the first cushion in laterally offset relationship from the sidewalls of the first cushion in a direction inwardly towards each other, and which converge in a direction away from the first cushion to form a composite cushion with oppositely stepped sidewalls, the second cushion terminating in an outer surface which is generally parallel to the surface of the plate from which the first cushion extends, and by the first cushion having its pair of sidewalls disposed at angles, measured relative to either of the planar surfaces which are less than correspondingly measured angles of the closest sidewalls of the second cushion.

In this Specification, when the words "top" and "bottom" are used they are used for the purpose of ease and clarity of description and without limiting intention. They are used in relation to a composite cushion pad of which the rigid plate is disposed horizontally.

The invention will be better understood from the following description of illustrative and nonlimiting examples, given with reference to the accompanying drawings, in which:—

Figure 1 is a perspective view of one example of a circular composite cushion pad made in accordance with the invention;

Figure 2 is a section of the pad viewed from the line 2—2 of Figure 1.

With reference to Figures 1 and 2, there is shown a composite cushion pad 6 which is designed for use in large off-the-road vehicles. The composite cushion pad 6 comprises a flat, rigid circular plate 7 having a centrally disposed opening 8 with a center axis A—A. The annular plate 7 is composed of any suitable material, e.g. steel, and is defined between a pair of inner and outer circular marginal edges 9, 10, relative to the center axis and a pair of opposing annular planar surfaces 11, 12.

A first, inner annular cushion 13 is conventionally bonded to each of the pair of planar surfaces 11, 12 of the metal plate 7 and extends therefrom. The inner or bottom cushions 13, closest the metal plate 7, surround the opening 8, and, preferably cover the planar surfaces 11, 12 of the metal plate 7 and are concentrically disposed about the center axis A—A of the opening 8. Each of the bottom cushions 13 is composed of any suitable resilient elastomeric material, such as rubber, and has a generally frusto-conical cross-section, defined by (i) an outer surface 14 which is generally parallel to the planar surfaces 11, 12 or plane of the metal plate 7, and (ii) a pair of inner and outer sloping sidewalls 15, 16 which are angularly disposed to the plane of the metal plate 7 and converge towards each other in a direction away from the metal plate 7. The sloping annular sidewalls 15, 16 of the bottom cushions 13 can be flat, concave, or convex intermediate their opposing circular marginal edges depending on the cushioning effect desired.

A second, outer annular cushion 17 is superimposed on the outer surface 14 of each bottom cushion 13 and extends therefrom in a direction away from the metal plate 7. The outer or top cushions 17, farthest from the metal plate 7, like the bottom cushions 13, each have a generally frusto-conical cross-section defined by (i) an outer surface 19 which is at least flat and preferably convexly curved in relation to the plane of the metal plate 7, and (ii) a pair of inner and outer sloping sidewalls 20, 21 which are angularly disposed to the plane of the metal plate 7 and generally converge towards each other in a direction away from the metal plate 7. The sloping annular sidewalls 20, 21 of the top cushions 17 can also be flat, concave, or convex intermediate their circular marginal edges, depending on the cushioning effect desired.

In some instances, it may be desirable to produce the top cushions 17 from a different resilient elastomeric material, e.g. a material which has different cushioning characteristics, from that of the bottom cushions 13. However, it is preferable to integrally make the bottom and top cushons 13, 17 of the same rubbery material to form a pair of identical, but oppositely disposed composite cushions 22 between which the metal plate 7 is sandwiched. It is also preferred to make the bottom and top cushions of the same elastomeric material in a case where only one side of the plate 7 carries elastomeric material.

One of a plurality of similar, frusto-conically shaped dowels 23 and matingly configured recesses 24 for receiving such dowels 23, as best described in U.S. patent 4,025,063, are provided in the outer curved surfaces 19 of the composite cushion 22 to maintain a plurality of like composite cushion pads 6 in juxtaposed alignment, as best illustrated in U.S. patent 3,537,696. The dowels 23 and recesses 24 are generally centered between the opposing sidewalls 20, 21 of the top cushions 17.

The inner sidewalls 20 of the top cushions 17 are laterally offset outwardly from the adjacent inner sidewalls 15 of the bottom cushions 13, relative to the center axis A—A of the metal plate 7, whereas the outer sidewalls 21 of the top cushions 17 are laterally offset inwardly from the adjacent outer sidewalls 16 of the bottom cushions 13. Thus, the converging sidewalls 20, 21 of the top cushions 17 are offset inwardly from the converging sidewalls 15, 16 of the bottom cushions 13 in a direction towards each other. The laterally offset inner sidewalls 15, 20 and laterally offset outer sidewalls 16, 21 of the bottom and top cushions 13, 17 are joined by annular surfaces 25, 26 which can be flat, but are preferably curved, being generally concave relative to the metal plate 7. The largest overall width W of the top cushions 17, measured adjacent the top of the bottom cushions 13 and in a radial direction relative to the center axis A—A of the opening 18, is smaller than the correspondingly measured width W of the adjacent outer surfaces 14 of the bottom cushions 13. Thus, it can be appreciated that a step is formed between the laterally offset inner sidewalls 15, 20 and the laterally offset outer sidewalls 16, 21 so that the composite cushions 22 are each provided with a pair of opposing inner and outer composite sidewalls 27, 28 which have a distinct, stepped configuration.

There are many different embodiments of the circular composite cushion pad 6, depending on the angular disposition of the sidewalls 15, 16, 20, 21 of the bottom and top cushions 13, 17 in relation to the planar surfaces 11, 12, or the plane of the metal plate 7. For example as best seen in Fig. 2, the bottom and top cushions 13, 17 can each be symmetrical, in cross-section relative to a center axis midway between the sidewalls, if the angular disposition of the converging sidewalls of each cushion is the same. Conversely, the bottom and top cushions 13, 17 can each be asymmetrical, in cross-section relative to a center axis midway between the sidewalls, if the angular disposition of the converging sidewalls of each cushion is different.

The inner and outer sidewalls 15, 16 of the bottom cushions 13 are disposed at angles B,C, measured in opposite directions from the plane of the metal plate 7, in the broad range of from 30° to 50°, each of the inner sidewalls 15 being sloped at an angle B which is preferably in the narrower range of from 40° to 50°, and each of the outer sidewalls 16 being sloped at an angle C which is preferably in the narrower range of from 30° to 40°. The inner and outer sidewalls 20, 21 of the top cushions 17 are disposed at angles D, E, also measured in opposite directions from the plane of the metal plate 7, in the broad range of from 40° to 60°, each of the inner sidewalls 20 being sloped at an angle D which is preferably in the narrower range of from 50° to 60° and each of the outer sidewalls 21 being sloped at an angle E which is preferably in the narrower range of from 40° to 50°. The angular disposition of the outer sidewalls 21, 16 of the top and bottom cushions 17, 13 are preferably smaller, e.g. 5° to 10°, than the angular disposition of the inner sidewalls 20, 15, so that the major portion, or bulk of the rubbery material of the composite cushions 22, is closer the opening 8 in the metal plate 7, in accordance with the teachings of U.S. patent 3,086,765. Exemplary of a well designed composite cushion pad 6, is a pad having, (i) bottom cushions 13 with opposing inner and outer sidewalls 15, 16 at angles B, C, respectively, of 45° and 35°, and (ii) top cushions 17 with opposing inner and outer sidewalls 20, 21 at angles D, E, respectively, of 55° and 45°.

Thus, there has been described composite cushion pads which provide different spring rates or cushioning effects by the provision of at least two differently sized resilient elastomeric cushions which are pyramided on opposing sides of a rigid circular plate. The cross-sectional area of the top cushion of each composite cushion, is always less than the correspondingly measured cross-sectional area of the bottom cushion. A soft cushioning effect results, when the smaller outer cushions of two like pads contact. This soft cushioning effect is subsequently firmed up as the larger, inner cushions of the pads are brought into play.

It will thus be seen that, in general terms, the invention resides in a composite cushion pad which has a rigid plate with opposing planar surfaces. A first, bottom cushion of resilient elastomeric material is bonded to at least one of the opposing surfaces of the plate and extends therefrom. The bottom cushion has a generally frusto-conical cross-section defined by a pair of opposing sidewalls which converge towards each other in a direction away from the plate. At least one other resilient elastomeric top cushion is disposed in superimposed relation on top of (atop) the bottom cushion and, likewise, has a generally frusto-conical cross-section defined by a pair of opposing sidewalls which also converge towards each other in a direction away from the plate. The converging sidewalls of the top cushion or cushions, adjacent the converging sidewalls of the bottom cushion, are laterally offset from the converging sidewalls of the bottom cushion inwardly towards each other to form a composite cushion of differently sized cushions with a pair of opposing stepped sidewalls.

## Claims

1. A composite cushion pad, comprising a circular rigid plate (7) having a centrally disposed opening (8) defining a pair of parallel planar surfaces (11, 12) bounded by a continuous inner marginal edge (9) adjacent the opening and a continuous outer marginal edge (10) spaced from the inner marginal edge and a first, single annular resilient cushion (13) bonded to at least one of the surfaces of the plate and extending therefrom and having a pair of opposing continuous marginal sidewalls (15, 16) extending from adjacent the inner and outer marginal edges of the plate and converging in a direction away from the plate, the pad being characterized by a second, single annular resilient cushion (17) stop the first cushion (13) and integral therewith, the second cushion having a pair of opposing continuous marginal sidewalls (20, 21) which extend from the first cushion in laterally offset relationship from the sidewalls of the first cushion in a direction inwardly towards each other, and which converge in a direction away from the first cushion to form a composite cushion with oppositely stepped sidewalls, the second cushion terminating in an outer surface (19) which is generally parallel to the surface of the plate from which the first cushion extends, and by the first cushion having its pair of sidewalls (15, 16) disposed at angles, measured relative to either of the planar surfaces (11, 12) which are less than correspondingly measured angles of the closest sidewalls (20, 21) of the second cushion.

2. A pad according to claim 1, including at least one substantially frusto-conically shaped dowel portion (23) known *per se*, characterised in that the dowel portion is integral with and projects from the outer surface of the second cushion in a direction away from the plate and includes at least one correspondingly shaped complementary recess (24) provided in the outer surface of the second cushion for receiving the dowel portion of a second composite cushion pad arranged with its second outer surface adjacent that of the first pad, the dowel portion of the first pad engaging the recess of the second pad.

3. A pad according to claims 1 or 2 characterised in that the pair of opposing annular sidewalls (20, 21) of the second cushion of the or each composite cushion are disposed at different acute angles to either of the respective planar surfaces (11, 12) and in that the sidewalls of the first and the second cushion, as the case may be, closest the opening (8) in the plate are disposed at greater angles, relative to the respective planar surface, than the respective sidewalls of the first and the second cushion farthest from the opening (8).

## Patentansprüche

1. Ein zusammengesetzter Dämpfungspuffer, beinhaltend eine kreisförmige Stahlplatte (7) mit einer zentral darin vorgesehenen Öffnung (8), definierend ein Paar paralleler ebener Flächen (11, 12) die durch eine kontinuierliche innere Randkante (9) benachbart der Öffnung und eine kontinuierliche äußere Randkante (10) verbunden sind, die abständig von der inneren Randkante liegt, und einem ersten, einzelnen ringförmigen Federkissen (13), das mit mindestens einer der Oberflächen der Platte verbunden ist und sich von dort aus erstreckt und ein Paar einander gegenüberliegender kontinuierlicher Seitungsbegrenzungswände (15, 16) hat, die sich ausgehend von der Nähe der inneren und äußeren Randkante der Platte erstrecken und die in einer Richtung von der Platte fort konvergieren, gekennzeichnet durch ein zweites einzeines ringförmiges Federkissen (17) oben auf dem ersten Kissen (13) und integral mit ihm, wobei des zweite Federkissen ein Paar einander gegenüberliegender kontinuierlicher Seitenbegrenzungswände (20, 21) aufweist, die sich von dem ersten Federkissen in seitlich versetzter Lage zu den Seitenbegrenzungswänden des ersten Kissens in einer Richtung nach innen aufeinander zu erstrecken und die in einer Richtung vom ersten Kissen fort konvergieren, um ein zusammengesetztes Kissen mit gegenüberliegend abgegrenzten Seitenbegrenzungswänden zu bilden, wobei das zweite Kissen in einer äußeren Oberfläche (19) endet, im wesentlichen parallel zur Oberfläche der Platte liegt, von der sich das erste Kissen erstreckt und wobei das erste Kissen sein Seitenwandpaar (15, 16) in Winkeln angeordnet hat, die, gemessen relativ zu einer der ebenen Flächen (11, 12) geringer sind als die entsprechenden gemessenen Winkel der nächstliegenden Seitenwände (20, 21) des zweiten Kissens.

2. Ein Dämpfungspuffer nach Anspruch 1, beinhaltend mindestens einen im wesentlichen kegelstumpfförmigen, an sich bekannten Zapfen (23), dadurch gekennzeichnet, daß der Zapfenbereich integral mit dem zweiten Kissen und sich von der äußeren Oberfläche des zweiten Kissens in einer Richtung von der Platte fort erstreckt und ferner beinhaltend mindestens eine entsprechend geformte komplementäre Ausnehmung (24) zu der äußeren Oberfläche des zweiten Kissens zur Aufnahme des Zapfenabschnittes eines zweiten zusammengesetzten Dämpfungspuffers, der mit seiner zweiten äußeren Oberfläche angrenzend an dem ersten Dämpfungspuffer angeordnet wird, wobei der Zapfenabschnitt des ersten Puffers in die Ausnehmung des zweiten Puffers eingreift.

3. Ein Dämpfungspuffer nach den Ansprüchen 1 oder 2, dadurch gekennzeichnet, daß das Paar einander gegenüberligender ringförmiger Seitenwände (20, 21) des zweiten Kissens des oder jedes zusammengesetzten Dämpfungspuffers in unterschiedlichen spitzen Winkeln nur einer der jeweiligen ebenen Oberflächen (11, 12) angeordnet ist und daß die Seitenwände des ersten und des zweiten Kissens, wie es jeweils der Fall sein mag. die der Öffnung (8) in der Platte am nächsten liegen, relativ zur jeweiligen ebenen Oberfläche in einem größeren Winkel angeordnet sind, als die jeweiligen Seitenwände des ersten oder zweiten Kissens, das am weitesten von der Öffnung (8) entfernt liegt.

## Revendications

1. Tampon amortisseur composite, comprenant une plaque rigide circulaire (7), qui présente une ouverture centrale (8) définissant deux surfaces planes parallèles (11, 12) délimitées par un bord intérieur coninu (9) près de l'ouverture et un bord extérieur continu (10) espacé du bord intérieur, et un premier coussin résilient annulaire unique (13) fixé à au moins l'une des surfaces de la plaque en saillie par rapport à celle-ci, ce coussin présentant deux parois latérales continues opposées (15, 16) qui partent du voisinage des bords intérieur et extérieur de la plaque et convergent dans une direction qui s'éloigne de la plaque, le tampon étant caractérisé en ce qu'un deuxième coussin résilient annulaire unique (17) est placé sur le premier coussin (13) solidairement avec celui-ci, le deuxième coussin comportant deux parois latérales continues opposées (20, 21) qui partent du premier coussin avec un décalage latéral par rapport aux parois latérales du premier coussin, dans une direction allant vers l'intérieur et l'une vers l'autre et qui convergent dans une direction qui s'éloigne du premier coussin pour former un coussin composite à parois latérales en gradins en opposition, le deuxième coussin se terminant par une surface extérieure (19) qui est sensiblement parallèle à la surface de la plaque d'où part le premier coussin, le premier coussin ayant ses deux parois latérales (15, 16) inclinées suivant des angles, mesurés par rapport à l'une ou l'autre des surfaces planes (11, 12), qui sont inférieurs aux angles, mesurés de façon correspondante, des parois latérales les plus proches (20, 21) du deuxième coussin.

2. Tampon suivant la revendication 1, comprenant au moins un bossage (23) de forme sensiblement tronconique, connu en lui-même, caractérisé en ce que le bossage est solidaire de la surface extérieure du deuxième coussin à partir de laquelle il fait saillie dans une direction qui s'éloigne de la plaque et en ce qu'il comprend au moins un logement complémentaire (24), de forme correspondante, ménagé dans la surface extérieure du deuxième coussin pour recevoir le bossage d'un deuxième tampon amortisseur composite disposé avec sa deuxième surface extérieure adjacente à celle du premier tampon, le bossage du premier tampon s'engageant dans le logement du deuxième tampon.

3. Tampon suivant la revendication 1 ou 2, caractérisé en ce que les deux parois latérales annulaires opposées (20, 21) du deuxième coussin de chaque coussin composite sont disposées suivant des angles aigus différents par rapport à l'une ou l'autre des surfaces planes respectives (11, 12), et en ce que les parois latérales des premier et deuxième coussins, suivant le cas, les plus proches de l'ouverture (8) ménagée dans la plaque sont disposées suivant des angles plus grands, par rapport à la surface plane respective, que les parois latérales respectives des premier et deuxième coussins, les plus éloignées de l'ouverture (8).

FIG.1

FIG.2